# EUROPÄISCHE PATENTSCHRIFT

(11) **EP 0 701 515 B1**
(45) Veröffentlichungstag und Bekanntmachung des Hinweises auf die Patenterteilung: **04.06.1997**
(21) Anmeldenummer: 95910422.5
(22) Anmeldetag: 28.02.1995
(51) Int. Cl.: B60R 16/02

(54) **VERFAHREN ZUR ZYKLISCHEN ÜBERTRAGUNG VON DATEN ZWISCHEN MINDESTENS ZWEI VERTEILT ARBEITENDEN STEUERGERÄTEN**
METHOD OF CYCLICALLY TRANSFERRING DATA BETWEEN AT LEAST TWO SEPARATELY OPERATING CONTROL APPARATUS
PROCEDE POUR LE TRANSFERT CYCLIQUE DE DONNEES ENTRE AU MOINS DEUX APPAREILS DE COMMANDE FONCTIONNANT SEPAREMENT

(30) Priorität: 14.03.1994 DE 4408488
(43) Veröffentlichungstag der Anmeldung: 20.03.1996
(73) Patentinhaber: ROBERT BOSCH GMBH, 70442 Stuttgart (DE)
(72) Erfinder: EITRICH, Frank-Thomas, D-72760 Reutlingen (DE)
(86) Internationale Anmeldenummer: DE9500256
(87) Internationale Veröffentlichungsnummer: WO9525024

(56) Entgegenhaltungen:
- DE-U- 9 215 496
- ELEKTRONIK, Bd.39, Nr.12, 8. Juni 1990, MÜNCHEN, DE Seiten 109 - 114, XP000128165 ETSCHBERGER ET AL. 'VOM AUTO IN DIE INDUSTRIE'
- ATZ, Bd.94, Nr.2, Februar 1992, STUTTGART ,DE Seiten 66 - 77, XP246529 DAIS ET AL. 'TECHNISCHES KONZEPT DES SERIELLEN BUS - SYSTEMS CAN - TEIL1'

## Beschreibung

### Stand der Technik

Die Erfindung geht aus von einem Verfahren zur zyklischen Übertragung von Daten zwischen mindestens zwei verteilt arbeitenden Steuergeräten nach der Gattung des Hauptanspruchs. Es ist schon ein Verfahren zur zyklischen Übertragung von Daten zwischen mindestens zwei verteilt arbeitenden Steuergeräten aus dem Artikel "Bussystem für Kfz-Steuergeräte" von W. Botzenhardt, M. Litschel und J. Unruh, VDI Berichte Nr. 612, Seiten 459 bis 470, 1986 bekannt. Darin wird als Beispiel die Motordrehzahl einer Brennkraftmaschine von einer Motorsteuerung ermittelt und zyklisch über ein CAN-Bussystem zu einer Getriebesteuerung und einem Fahrerinformationssystem übertragen. Die Motordrehzahl der Brennkraftmaschine ist im laufenden Betrieb der Brennkraftmaschine einer ständigen Variation unterworfen. Sie muß daher in kurzen Zeitabständen zyklisch von dem Motorsteuergerät zur Getriebesteuerung und zu dem Fahrerinformationssystem übertragen werden. Die Übertragung der Drehzahldaten findet- mit Hilfe einer Botschaft, die die Drehzahldaten enthält, statt. Die CPU des Motorsteuergerätes berechnet zyklisch die Motordrehzahldaten aus dem Meßsignal des angeschlossenen Drehzahlsensors. Sie gibt dann an die CAN-Schnittstelle des Steuergerätes eine Übertragungsanforderung für die Drehzahldaten. Dabei legt sie die zu übertragenden Daten in einem Speicher der CAN-Schnittstelle ab und setzt ein Übertragungsanforderungs-Bit in einem Statusregister der CAN-Schnittstelle. Zwischen der Übertragungsanforderung und der tatsächlichen Übertragung der Drehzahldaten kann jedoch im ungünstigsten Fall eine größere Zeitdifferenz auftreten.

### Vorteile der Erfindung

Das erfindungsgemäße Verfahren mit den kennzeichnenden Merkmalen des Hauptanspruchs hat demgegenüber den Vorteil, daß die Aktualität der übertragenen Daten erheblich gesteigert ist.

Ein weiterer Vorteil ist, daß zur Verringerung des Aktualitätsverlustes keine Eingriffe in das Übertragungs-Protokoll für die serielle Datenübertragung erforderlich sind. Über den seriellen Bus können weiterhin beliebig Botschaften ausgetauscht werden.

Durch die in den Unteransprüchen aufgeführten Maßnahmen sind vorteilhafte Weiterbildungen und Verbesserungen des im Hauptanspruch angegebenen Verfahrens möglich. So ist es vorteilhaft, wenn in den mindestens zwei Steuergeräten, zwischen denen zyklisch Daten übertragen werden, jeweils ein Zähler, insbesondere Zeit- oder Winkelzähler, kontinuierlich gezählt wird und daß der Zähler in dem Steuergerät, das die Daten empfängt aufgrund der empfangenen Daten auf einen definierten Wert gesetzt wird. Dadurch ist leicht eine Synchronisation zwischen den Steuergeräten möglich. Sehr vorteilhaft ist dann auch, daß der definierte Wert durch die empfangenen Daten direkt angegeben wird. Es muß dann erst keine längere Berechnung durchgeführt werden, die zusätzlich eine Zeitverzögerung bewirken würde.

Weiterhin vorteilhaft ist, daß die Zeit für die Übertragung der Daten von dem Steuergerät, das die Daten absendet, derart berücksichtigt wird, daß die letztlich übertragenen Daten einen in die Zukunft projizierten Wert angeben, wobei dann der Wert dem Zählerstand des Steuergerätes, das die Daten absendet zu dem Zeitpunkt des voraussichtlichen Empfangs der Botschaft, die die Synchronisationsdaten überträgt, entspricht. Dadurch kann also der Aktualitätsverlust der übertragenen Daten noch weiter verringert werden. Ein nennenswerter Aktualitätsverlust entsteht dann nur noch, wenn die Drehzahl der Kurbelwelle der Brennkraftmaschine in Bereichen großer Dynamik einer starken Änderung unterworfen ist.

Um diese Berücksichtigung einfach durchzuführen, ist es vorteilhaft, daß in dem Steuergerät, das die Daten absendet, während einer vorherigen Übertragung von Daten die auftretenden Zählerinkrementierungen oder Dekrementierungen gezählt werden und daß dieser Wert bei einer nachfolgenden Übertragung von Daten zu dem aktuellen Zählerstand hinzuaddiert wird.

Eine weitere Möglichkeit der Berücksichtigung der Zeitdifferenz ist, daß in dem Steuergerät, das die Daten absendet, die Zeit für die Übertragung der Daten gemessen wird, daß zyklisch ein Meßfenster für die Dauer des gemessenen Zeitwertes erzeugt wird, daß in dem Meßfenster die auftretenden Zählerinkrementierungen oder Dekrementierungen gezählt werden und daß der jeweils aktuellste Wert bei einer nachfolgenden Übertragung von Synchronisationsdaten zu dem aktuellen Zählerstand hinzuaddiert wird. Dadurch wird die Dynamik des Motors besser berücksichtigt.

Ebenfalls vorteilhaft ist, wenn die Zeit für die Übertragung der Daten von dem Steuergerät, das die Daten empfängt derart, berücksichtigt wird, daß die empfangenen Daten so korrigiert werden, daß sich ein Zählerstand für den Zähler des empfangenden Steuergerätes ergibt, der dem Zählerstand des Steuergerätes, das die Daten abgesendet hat zu dem Zeitpunkt des vollständigen Empfangs der Botschaft, die die Daten übertragen hat, entspricht. In diesem Fall würde die Berücksichtigung der Übertragungszeit also von dem Steuergerät, das die Daten empfängt, vorgenommen werden. Dazu ist es vorteilhaft, wenn das Steuergerät während der Übertragung der Daten die auftretenden Zählerinkrementierungen oder Dekrementierungen seines Zählers zählt und zu dem Wert, der sich aus den empfangenen Daten ergibt, hinzuaddiert und dann seinen Zähler auf den sich ergebenden Wert setzt. Der Gangunterschied der Zähler in dem sendenden Steuergerät und dem empfangenden Steuergerät ist dann wiederum nur noch bei großen Dynamikänderungen der Drehzahl der Brennkraftmaschine nennenswert.

Für eine Busteilnehmerstation zur Verwendung bei dem Verfahren zur zyklischen Datenübertragung ist es vorteilhaft, daß sie Mittel aufweist, die bei der Abwicklung des Sendeauftrages mindestens einen Teil der zuvor in das Schieberegister seiner Netzwerk-Schnittstelle eingespeicherten Daten durch die neuesten, in der Zwischenzeit aktualisierten Daten ersetzen. In den Unteransprüchen 11 und 12 sind vorteilhafte Ausgestaltungen einer solchen Busteilnehmerstation angegeben, die keinen allzu großen Schaltungsaufwand verursachen.

Weiterhin vorteilhaft ist, daß die Rechen/Steuereinheit der Busteilnehmerstation so ausgelegt ist, daß sie den Sendeauftrag zyklisch an die serielle Schnittstelle abgibt, wobei die Steuereinheit hierzu einen kontinuierlich zählenden Zähler aufweist, der jeweils nach dem Durchlaufen eines vorbestimmten Zählerintervalls ein Signal abgibt, durch das ein Sendeanforderungs-Bit in einem Statusregister der seriellen Schnittstelle gesetzt wird. Dadurch wird die CPU von dieser Aufgabe entlastet und die Zeitverzögerung zwischen Bereitstellung der aktualisierten Daten und der Setzung des Sendeanforderungs-Bits wird um die CPU-Latenzzeit verringert.

Für eine weitere Busteilnehmerstation zur Verwendung bei dem Verfahren zur zyklischen Übertragung von Daten ist es vorteilhaft, wenn sie Mittel aufweist, die bei dem Empfang einer Botschaft zumindest einen Teil der empfangenen Daten parallel in ein zweites Schieberegister einspeichern. Dieser Teil der Daten steht dann unverzüglich einer Datenverarbeitungseinheit zur Verfügung, die diese Daten benötigt. Damit muß nicht erst die CPU der Busteilnehmerstation damit belastet werden, die empfangenen Daten von der seriellen Schnittstelle abzuholen und in die notwendige Datenverarbeitungseinheit einzuschreiben. Die Zeitverzögerung, die sich durch den Abholvorgang der Daten über die CPU in die Datenverarbeitungseinheit ergibt, kann dadurch entfallen.

Damit keine fehlerhaften Daten in die Datenverarbeitungseinheit gelangen, ist es vorteilhaft, wenn die in das zweite Schieberegister eingespeicherten Daten erst dann zur Verarbeitung übernommen werden, wenn die serielle Schnittstelle die empfangene Botschaft auf Fehlerfreiheit überprüft hat und dabei festgestellt hat, daß die Botschaft fehlerfrei übertragen wurde.

### Zeichnung

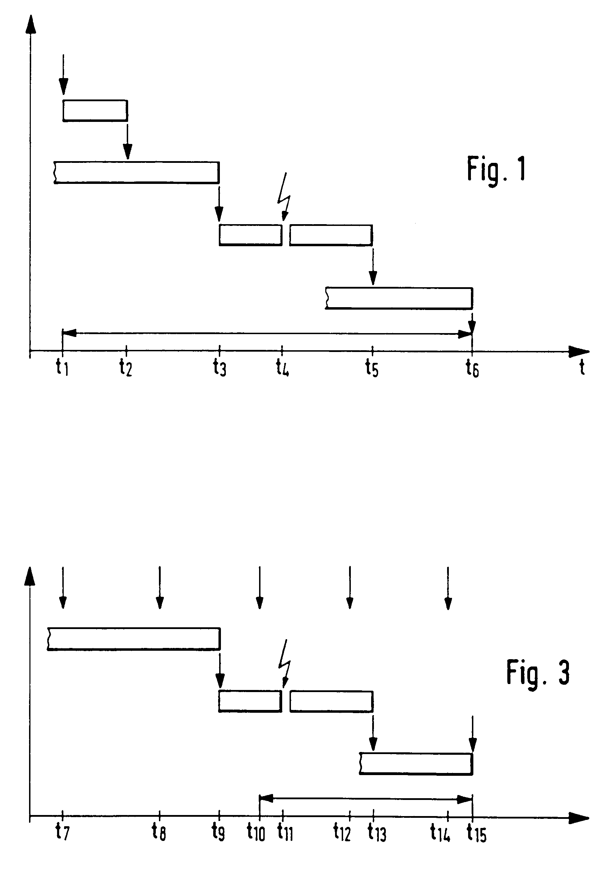

Ein Ausführungsbeispiel der Erfindung ist in der Zeichnung dargestellt und in der nachfolgenden Beschreibung näher erläutert. Es zeigen Figur 1 ein Zeitdiagramm für die Übertragung einer Botschaft, wie es nach dem aus dem Stand der Technik bekannten Verfahren üblich ist;
Figur 2 einen Steuergeräteverbund für ein verteiltes Motormanagement;
Figur 3 ein Signaldiagramm einer Übertragung einer Botschaft gemäß des erfindungsgemäßen Verfahrens;
Figur 4 ein vereinfachtes Schaltbild für ein erstes Steuergerät des Steuergeräteverbundes und
Figur 5 ein Signaldiagramm der nach dem CAN-Protokoll übertragenen Daten einer Botschaft;
Figur 6 ein Signaldiagramm, das die erfindungsgemäße Korrektur der übertragenen Daten zeigt;
Figur 7 ein vereinfachtes Blockschaltbild für ein zweites Steuergerät des Steuergeräteverbundes;
Figur 8 ein vereinfachtes Blockschaltbild einer Steuereinheit entsprechend Fig 7 mit einer zweiten Steuereinheit;
Figur 9 ein Signaldiagramm, das eine Variante zu Figur 6 zeigt.

### Beschreibung der Erfindung

Zuerst wird anhand der Figur 1 erläutert, welche Effekte für die Verzögerung der Datenübertragung der Drehzahl-Daten gemäß dem im Kapitel Stand der Technik angegebenen Anwendungsfall verantwortlich sein können. Zum Zeitpunkt t1 findet die Drehzahlerfassung in der CPU des Motorsteuergerätes statt. Zum Zeitpunkt t2 setzt die CPU des Motorsteuergerätes das Übertragungsanforderungs-Bit im Statusregister der CAN-Schnittstelle. Die CAN-Schnittstelle kann den Sendeauftrag nicht sofort ausführen, weil der Bus durch eine vorher angefangene Übertragung einer anderen Botschaft noch belegt ist. Erst zum Zeitpunkt t3 erkennt die CAN-Schnittstelle, daß der Bus frei ist` und beginnt mit der Übertragung der Botschaft mit den Drehzahl-Daten. Zum Zeitpunkt t4 erkennt die CAN-Schnittstelle, daß ein Fehler bei der Übertragung der Botschaft mit den Drehzahldaten aufgetreten ist, so daß sie die Botschaft noch einmal neu übertragen muß. Zum Zeitpunkt t5 ist die Botschaft dann vollständig übertragen. Die Getriebesteuerung übernimmt die empfangene Botschaft aber erst zum Zeitpunkt t6, weil die CPU der Getriebesteuerung erst eine angefangene Berechnung beendet hat, bevor sie den Interrupt der CAN-Schnittstelle des Getriebesteuergerätes bezüglich des Botschaftsempfangs annimmt. Die Zeitverzögerung t6 - t5 kann auch daher rühren, daß die CPU der Getriebesteuerung die CAN-Schnittstelle nach einem Polling-Verfahren daraufhin abfragt, ob Botschaften empfangen wurden oder nicht. Die Zeitdifferenz t2 - t1 wird auch als CPU-Latenzzeit bezeichnet. Die Zeitdifferenz t3 - t2 wird auch als Bus-Latenzzeit bezeichnet.

Insgesamt ergibt sich zwischen der Drehzahlerfassung und der Übernahme der Drehzahldaten seitens des Getriebe-Steuergerätes bzw. des Fahrerinformationssystems eine Zeitverzögerung von t6 - t1.

Diese Zeitdifferenz spielt bei dem Anwendungsfall wie er im Kapitel Stand der Technik angegeben ist keine ausschlaggebende Rolle, da die Drehzahldaten für die Getriebesteuerung und das Fahrerinformationssystem nicht innerhalb sehr kurzer Zeit aktualisiert sein müssen. Jedoch kann diese Zeitverzögerung z.B. bei einem verteilten Motor-Management sich negativ auf die Motorsteuerung (Kraftstoffverbrauch, Verschleiß, Abgaszusammensetzung, etc.) auswirken. Bei einem verteilten Motor-Management ist ein zentrales Steuergerät über einen seriellen Bus z.B. mit einem Einspritz-Steuergerät und einem Zünd-Steuergerät verbunden. Das zentrale Steuergerät führt die Meßwerterfassung durch und berechnet daraus die Zünd- und Schließwinkel für das Zündungs-Steuergerät sowie die Einspritzzeiten für das Einspritz-Steuergerät. Diese Werte werden dann über den seriellen Bus zu dem Zünd- bzw. Einspritz-Steuergerät übertragen. Die Zünd- und Einspritz-Befehle müssen jedoch für eine optimale Motorsteuerung synchron zur Drehbewegung der Kurbelwelle der Brennkraftmaschine ausgelöst werden. Dabei ist es erforderlich, daß auch die Zünd- und Einspritz-Steuergeräte Kenntnis über die aktuelle Position der Kurbelwelle der Brennkraftmaschine haben müssen. Damit jedoch nicht jedes dieser Steuergeräte eine eigene Drehzahlerfassung vornehmen muß, hat sich in letzter Zeit ein Vorschlag durchgesetzt, nach dem nur das zentrale Steuergerät die Stellung der Kurbelwelle der Brennkraftmaschine erfaßt und diese Information über den seriellen Bus zu den Zünd- bzw. Einspritz-Steuergeraten überträgt. Hier kommt es jedoch sehr stark auf die Aktualität der übertragenen Daten an, so daß es wünschenswert wäre, die Zeitverzögerung zwischen Drehzahlerfassung und Übernahme der übertragenen Drehzahldaten bei dem empfangenden Steuergerät weiter zu minimieren.

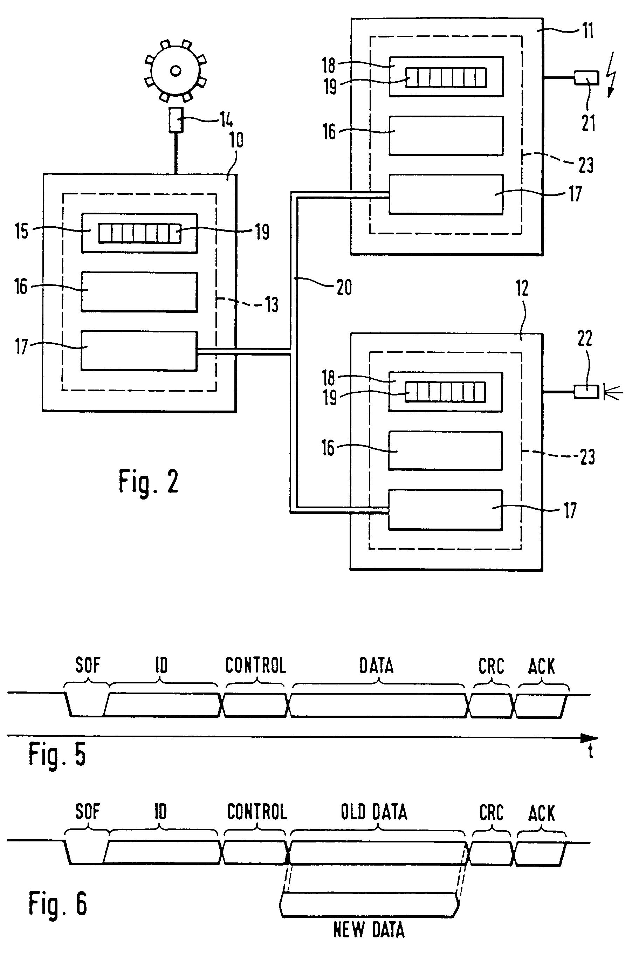

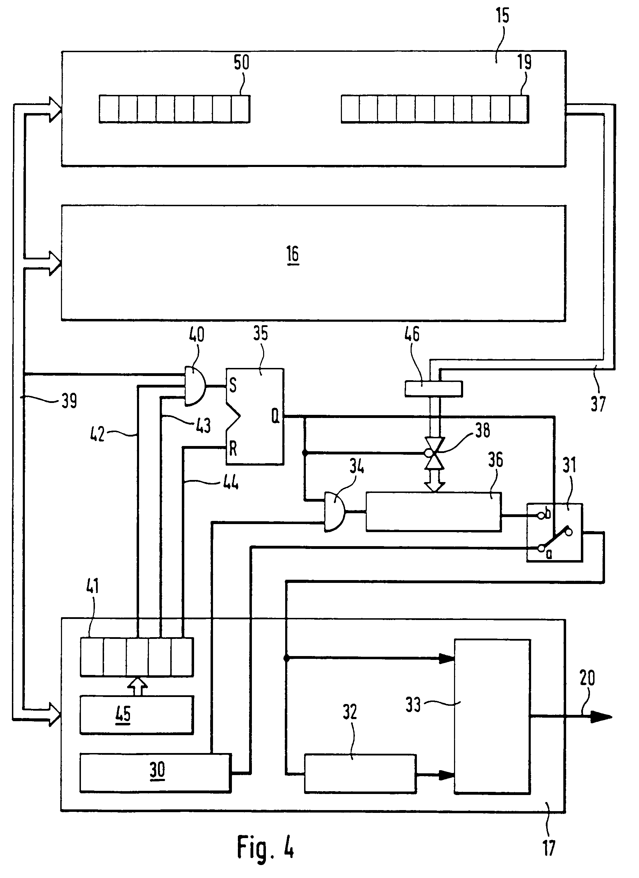

In Figur 2 bezeichnet die Bezugszahl 10 ein Hauptmodul eines verteilten Motormanagementsystems. Die Bezugszahl 11 bezeichnet das Zündungsmodul und die Bezugszahl 12 das Einspritzungsmodul für das verteilte Motormanagementsystem. Hauptmodul 10, Zündungsmodul 11 und Einspritzungsmodul 12 sind über einen seriellen Bus 20 miteinander verbunden. Der serielle Bus 20 kann z.B. als CAN-Bus ausgelegt sein. Die Abkürzung CAN steht für Controller Area Network. Dieses spezielle Bussystem wurde von der Anmelderin speziell für den Einsatz im Kraftfahrzeug entwickelt. Einzelheiten zu diesem Bussystem sind aus dem Stand der Technik hinreichend bekannt. Es wird hierzu insbesondere auf die Patentschrift DE 35 06 118 C2 Bezug genommen.

Das Hauptmodul 10 beinhaltet einen Mikrorechner 13, bestehend aus einer CPU 16, einer seriellen Schnittstelle 17 und einer Datenerfassungseinheit 15. Die serielle Schnittstelle 17 ist z.B. als CAN-Schnittstelle ausgelegt. Der Aufbau und die Funktionsweise einer CAN-Schnittstelle kann z.B. aus der Druckschrift 82526 Serial Communications Controller Architectural Overview, Intel Corp., 1989 entnommen werden. In der Datenerfassungseinheit 15 wird die Drehbewegung der Kurbelwelle der Brennkraftmaschine erfaßt. Dazu ist an das Hauptmodul 10 ein Kurbelwellensensor 14 angeschlossen. Der Kurbelwellensensor 14 detektiert die Drehbewegung der Kurbelwelle dadurch, daß er jedesmal bei Umlauf einer Winkelmarke eines rotierenden Teils, das mit der Kurbelwelle der Brennkraftmaschine gekoppelt ist, ein Signal erzeugt. Dieses Signal wird nach Aufbereitung der Datenerfassungseinheit 15 zugeführt. In der Datenerfassungseinheit 15 werden die auftretenden Rechteckimpulse pro Zeiteinheit gezählt. Daraus kann dann die Drehzahl der Brennkraftmaschine ermittelt werden. Aber nicht nur die Drehzahl ist als Information wichtig für die Motorsteuerung, sondern ebenfalls auch die jeweilige Position der Kurbelwelle in bezug auf eine Bezugsmarke. Daraus ergibt sich dann nämlich jeweils die Stellung der einzelnen Zylinder der Brennkraftmaschine, die für die Zündung und Einspritzungssteuerung notwendig sind. Es ist deshalb in der Datenerfassungseinheit 15 ein Zähler 19 vorgesehen, der bei dem Auftreten eines Signals aufgrund des Umlaufs einer Winkelmarke an dem Kurbelwellensensor 14 inkrementiert wird. Der Zählerstand dieses Zählers 19 gibt dann jeweils die aktuelle Position der Kurbelwelle an. Der Zähler 19 wird daher auch als Winkeluhr bezeichnet. Dabei wird noch erwähnt, daß die Winkelauflösung aufgrund des Umlaufs einer Winkelmarke häufig nicht ausreichend ist, so daß die Winkelmarkensignale durch Sonderbehandlung in der Datenerfassungseinheit 15 feiner unterteilt werden. Der Zähler 19 zählt dann die fein unterteilten Winkelimpulse.

Das Hauptmodul 10 dient auch noch zur Erfassung weiterer Motorparameter, wie Motorlast, Motortemperatur, Batteriespannung usw. Aus den Motorparametern berechnet es dann die Zünd- und Schließwinkel sowie die Einspritzzeiten für die einzelnen Zylinder der Brennkraftmaschine voraus. Diese Daten überträgt es dann über den seriellen Bus 20 zu dem Zündungs- und Einspritzungs-Modul 11 und 12. Das Zündungsmodul 11 führt dann mit den empfangenen Werten die Zünd- und Schließwinkelsteuerung durch. Dazu benötigt es dann selbst keine eigene Motorparametererfassung mehr. Ebenfalls führt dann das Einspritzungsmodul aufgrund der empfangenen Daten die Einspritzungssteuerung für die einzelnen Zylinder der Brennkraftmaschine durch. Auch das Einspritzungsmodul 12 benötigt dann keine eigene Motorparametererfassung mehr. An das Einspritzungsmodul 12 ist die Endstufe 22 für die Ansteuerung des Einspritzventils angeschlossen. An das Zündungsmodul 11 ist die Endstufe 21 für die Ansteuerung der Zündspule angeschlossen. In dem Zündungsmodul 11 ist ebenfalls ein Mikrorechner 23 enthalten. Dieser beinhaltet als Komponenten wiederum eine serielle Schnittstelle 17 und eine CPU 16. Darüber hinaus ist darin noch eine Steuereinheit 18 enthalten. In der Steuereinheit 18 befindet sich ebenfalls ein Zähler 19. Der Zähler 19 dient ebenfalls zur Angabe der Position der Kurbelwelle der Brennkraftmaschine. Der Zähler 19 wird jedesmal nach einem bestimmten Zeitintervall inkrementiert. Das Zeitintervall kann dabei beliebig vorgegeben werden. Damit eine optimale Steuerung des Motors gewährleistet ist, muß der Zähler 19 in dem Hauptmodul 10 synchron mit dem Zähler 19 in dem Zündungsmodul 11 laufen. Dies wird dadurch erreicht, daß der Zählerstand des Zählers 19 von dem Hauptmodul 10 in bestimmten Zeitabständen ausgelesen wird und über den seriellen Bus 20 zu dem Zündungsmodul 11 übertragen wird. Anhand des empfangenen Zählerstandes wird dann der Zählerstand des Zählers 19 im Zündungsmodul nachkorrigiert.

Das Einspritzungsmodul 12 besitzt im Prinzip den gleichen Aufbau wie das Zündungsmodul 11. Auch in ihm ist ein Mikrorechner 23 mit einer seriellen Schnittstelle 17, einer CPU 16 und einer Steuereinheit 18 eingesetzt. In der Steuereinheit 18 wird genauso ein Zähler 19 nachkorrigiert, wie dies schon bei dem Zündungsmodul 11 beschrieben wurde.

Die Übertragung einer Botschaft mit den Daten für die Position der Kurbelwelle wird jetzt anhand der Figur 3 erläutert.

Die Stellung der Kurbelwelle wird in dem zentralen Steuergerät in sehr kurzen Zeitabständen erfaßt, so daß jeweils zu den Zeitpunkten t7, t8, t10, t12 und t14 aktualisierte Daten bezüglich der Position der Kurbelwelle vorliegen. Es sei angenommen, daß zum Zeitpunkt t7 ein Sendeauftrag für die Übertragung der Position der Kurbelwelle der Brennkraftmaschine an die CAN-Schnittstelle des Steuergerätes, das die Drehzahlerfassung macht, gestellt wird. Der Sendeauftrag wird dann erst zum Zeitpunkt t9 ausgeführt, weil bis dahin der Bus noch belegt war. Zum Zeitpunkt t9 werden dann allerdings nicht die Daten, die zum Zeitpunkt t7 an die CAN-Schnittstelle übergeben wurden, gesendet, sondern statt dessen die in der Zwischenzeit aktualisierten Daten, die seit dem Zeitpunkt t8 vorliegen. Zum Zeitpunkt t11 tritt wiederum eine Störung auf. Die Botschaft wird daher erneut abgesendet. Bei der erneuten Absendung werden allerdings nicht die Daten, die bei dem Zeitpunkt t8 vorlagen gesendet, sondern statt dessen die aktualisierten Daten, die seit dem Zeitpunkt t10 vorliegen. Zum Zeitpunkt t13 ist die Übertragung der Botschaft mit den aktuellen Daten für die Position der Kurbelwelle abgeschlossen. Zum Zeitpunkt t15 werden die übertragenen Daten von dem empfangenen Steuergeräten übernommen. Der Aktualitätsverlust der übertragenen Daten beträgt also maximal die Zeitdifferenz t15 - t10. Wenn die zu übertragenden Daten von dem zentralen Steuergerät in noch kürzeren Zeitabständen bereitgestellt werden, kann die Zeitverzögerung weiter reduziert werden.

Anhand der Figur 4 soll jetzt der Aufbau des Mikrorechners 13 des Hauptmoduls 10 näher erläutert werden. Gleiche Bezugszahlen benennen hier die gleichen Teile, wie schon in Figur 2 erläutert. Die serielle Schnittstelle 17 beinhaltet ein Schieberegister 30. Der Ausgang des Schieberegisters 30 ist mit einem Umschalter 31 verbunden. Von dem Umschalter 31 führt eine Leitung zu einem CRC-Schaltkreis 32 und zu einer Bussteuerungseinheit 33. Der Ausgang der Bussteuerungseinheit 33 ist dann mit dem seriellen Bus 20 verbunden. Von dem Schieberegister 30 führt eine Leitung zu einem ersten UND-Gatter 34. Über diese Leitung wird der Schiebetakt des Schieberegisters 30 übertragen. Der zweite Eingang des UND-Gatters 34 ist mit dem Ausgang eines R/S-Flip-Flop 35 verbunden. Der Ausgang des UND-Gatters 34 steht mit dem Takteingang eines zweiten Schieberegisters 36 in Verbindung. Der Ausgang des Schieberegisters 36 ist ebenfalls mit dem Umschalter 31 verbunden. Über den Q-Ausgang des R/S-Flip-Flops 35 kann der Umschalter 31 betätigt werden. Von dem zweiten Schieberegister 36 geht eine Busverbindung 37 zu der Datenerfassungseinheit 15. Über diese Busverbindung 37 und den Schalter 38 werden die zu übertragenden Daten aus dem Zähler 19 permanent dem zweiten Schieberegister 36 eingespeist. Ein nicht unbedingt notwendiges Latch 46 dient als Datenpuffer der Busverbindung 37.

Der Schalter 38 kann über ein Signal von dem Q-Ausgang des R/S-Flip-Flops durchgeschaltet werden. Die serielle Schnittstelle 17 steht weiterhin über eine Daten-/Adreß- und Steuer-Busverbindung 39 mit der CPU 16 und der Datenerfassungseinheit 15 des Mikrorechners 13 in Verbindung. Von der Busverbindung 39 führt eine Steuerleitung zu einem Eingang eines zweiten UND-Gatters 40. Die serielle Schnittstelle 17 weist noch ein Statusregister 41 auf. Von diesem gehen Steuerleitungen 42 und 43 zu weiteren Eingängen des zweiten UND-Gatters 40. Der Ausgang des zweiten UND-Gatters 40 ist mit dem Setzeingang des R/S-Flip-Flops 35 verbunden. Eine weitere Steuerleitung 44 führt von dem Statusregister 41 zu dem Rücksetz-Eingang des R/S-Flip-Flops 35. Die serielle Schnittstelle 17 weist noch einen Bitzähler 45 auf. Anhand des Zählerstandes des Bitzählers 45 wird bei einer Absendung einer Botschaft entschieden, wann bestimmte Bits des Statusregisters 41 gesetzt werden. In der Datenerfassungseinheit 15 kann noch ein weiterer Zähler 50 enthalten sein.

Nachfolgend wird jetzt die Funktionsweise der Anordnung in Figur 4 näher erläutert. Vor der Absendung einer Botschaft gibt die Datenerfassungseinheit 15 einen Sendeauftrag an die serielle Schnittstelle 17. Sie schreibt dazu die zu übertragenden Daten in das Schieberegister 30 der seriellen Schnittstelle 17 ein. Die Zeit, wann der Sendeauftrag jeweils gestellt wird, wird durch den Zähler 50 vorgegeben. Gleichzeitig setzt sie auch ein Sendeanforderungs-Bit im Statusregister 41 der seriellen Schnittstelle 17. Die serielle Schnittstelle 17 wickelt dann den Sendeauftrag selbständig ab. Die zu übertragenden Daten werden in einer Botschaft mit einem bestimmten Botschaftsformat übertragen. Das Botschaftsformat für den CAN-Bus ist in der Figur 5 näher dargestellt. Die Botschaft beginnt mit einem SOF (Start of Frame)-Bit. Anschließend folgt ein ID (Identifier)-Feld. Dieses Feld gibt an, welche Daten mit dieser Botschaft übertragen werden. Der Identifier hat also die Funktion eines Datennamens (Position der Kurbelwelle der Brennkraftmaschine, Motortemperatur der Brennkraftmaschine, Motordrehzahl, Zündwinkel für Zylinder 1, etc.). Anschließend wird ein CONTROL-Feld übertragen. Dieses Feld kann für verschiedene Zwecke benutzt benutzt werden. Es kann darin z.B. eine Information eingetragen werden, die die Länge der nachfolgenden Daten angibt. Nach dem CONTROL-Feld folgt dann das Data-Feld mit den eigentlichen Daten. Nach dem Data-Feld wird dann noch ein CRC-Feld übertragen. Dieses Feld dient zur Absicherung der Datenübertragung. Es wird darin ein Code abgelegt, anhand dessen das empfangende Steuergerät erkennen kann, ob die Botschaft fehlerfrei übertragen wurde oder nicht. Die Botschaft wird abgeschlossen durch ein ACK-Feld, in dem die empfangende Station den Empfang der Botschaft bestätigen kann.

Nachdem die serielle Schnittstelle 17 den Sendeauftrag für die Absendung der Daten bezüglich der aktuellen Position der Kurbelwelle erhalten hatte, beobachtet Sie den angeschlossenen Bus 20 darauf, ob er belegt ist oder nicht. Sobald sie den Bus als frei erkennt, startet sie dann die Absendung der in Auftrag gegebenen Botschaft. Zu diesem Zeitpunkt ist der Umschalter 31 in Position a geschaltet, so daß die Daten in dem Schieberegister 30 der seriellen Schnittstelle 17 über die Bussteuereinheit 33 auf den angeschlossenen seriellen Bus 20 gelangen können. Bei Absendung der Botschaft wurde dann auch der Bitzähler 45 gestartet. Gleichzeitig mit dem Start des Bitzählers wurde ein Bit im Statusregister 41 gesetzt, so daß die Steuerleitung 42 an den entsprechenden Eingang des zweiten UND-Gatters 40 einen "1"-Signal anlegt. Schon bei Stellung des Sendeauftrags an die serielle Schnittstelle 17 wurde von Seiten der CPU 16 die erste Eingangsleitung des UND-Gatters 40 auf "1"-Pegel gesetzt. Nachdem das Identifier-Feld und auch das CONTROL-Feld über das Schieberegister 30 auf die Busleitung 20 übertragen wurde, erreicht der Bitzähler 45 einen Zählerstand, durch den ein weiteres Bit im Statusregister 41 gesetzt wird. Dadurch wird auch über die Übertragungsleitung 43 ein "1"-Signal auf den dritten Eingang des UND-Gatters 40 gelegt. Somit wird das R/S-Flip-Flop 35 gesetzt. Über den Q-Ausgang des R/S-Flip-Flops 35 wird daraufhin der Umschalter 31 in Stellung b umgeschaltet. Gleichzeitig wird der Schalter 38 ausgeschaltet und so der Stand des Zählers 19 zum Zeitpunkt des Setzens des R/S-Flip-Flops 35 im zweiten Schieberegister 36 festgehalten. Durch das Signal am Q-Ausgang des R/S-Flip-Flops 35 liegt an dem entsprechenden Eingang des UND-Gatters 34 ein logisches "1"-Signal an. Dadurch wird dann das UND-Gatter 34 jedesmal dann durchlässig, wenn das Bittakt-Signal von dem Schieberegister 30 der seriellen Schnittstelle 17 ein logisches "1"-Signal erzeugt. Somit wird ab diesem Zeitpunkt das Schieberegister 36 getaktet und die in dem Schieberegister 36 übernommenen Daten werden über den Umschalter 31 auf den seriellen Bus 20 übertragen. Nachdem das letzte Bit des Datenfeldes übertragen wurde, erreicht der Bitzähler 45 wieder einen Zählerstand, durch den ein weiteres Bit im Statusregister 41 gesetzt wird. Durch dieses Setzen des Bits wird über die Übertragungsleitung 44 das R/S-Flip-Flop 35 zurückgesetzt. Über den Q-Ausgang des R/S-Flip-Flops 35 wird somit der Umschalter 31 betätigt, so daß er die Schaltposition a wiederum einnimmt. Es wird ebenfalls das UND-Gatter 34 gesperrt, so daß keine weiteren Taktsignale an das Schieberegister 36 gelangen können. Anschließend wird noch von der CRC-Einheit 32 das CRC-Feld auf den seriellen Bus 20 übertragen. Die Bussteuereinheit 33 gibt dann noch das ACK-Feld auf den seriellen Bus 20 aus. Ein Botschaftsübertragung ist danach beendet. Durch die erfindungsgemäße Anordnung wurde also erreicht, daß die Daten, die die Datenerfassungseinheit 15 bei Stellung des Sendeauftrags für die Übertragung der aktuellen Kurbelwellenposition bereitgestellt hat, ersetzt wurden, durch diejenigen Daten, die zum Zeitpunkt der Übertragung des Datenfeldes in dem Zähler 19 anstanden und somit die größere Aktualität aufwiesen. Dies ist in Figur 6 auch dargestellt.

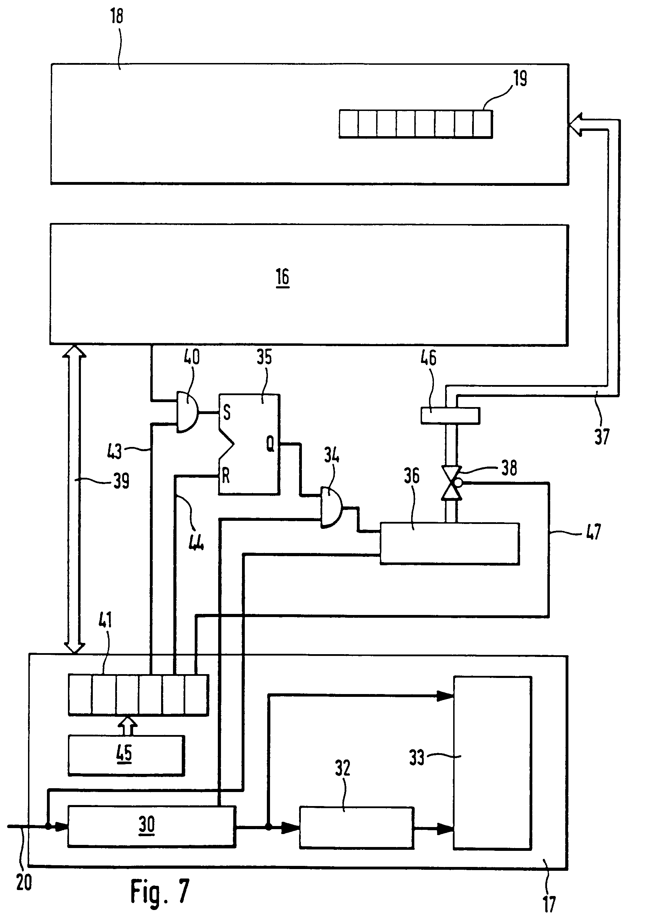

Nachfolgend wird anhand der Figur 7 der Aufbau des Mikrorechners 23 des Zündungs-Moduls 11 näher erläutert. Soweit der Aufbau mit dem Aufbau des Mikrorechners 13 des Haupt-Moduls 10 übereinstimmt, wurden bei der Darstellung des Zündungs-Moduls 11 soweit es ging die gleichen Bezugszahlen verwendet. Es erübrigt sich daher, die gleichen Komponenten noch einmal zu beschreiben. Ein Unterschied liegt insofern vor, als daß für den Mikrorechner 23 kein Umschalter vorgesehen ist. Der serielle Bus 20 ist sowohl mit dem Dateneingang des Schieberegisters 30 als auch mit dem Dateneingang des zweiten Schieberegisters 36 verbunden. Ein weiterer Unterschied besteht darin, daß der Schalter 38 nicht mehr von dem Q-Ausgang des R/S-Flip-Flops 35 angesteuert wird und die im zweiten Schieberegister 36 bereitstehenden Daten permanent einem Latch 46 zur Zwischenspeicherung übertragen werden. Der Schalter 38 wird ebenfalls vom Statusregister 41 aus angesteuert. Das UND-Gatter 40 besitzt nur noch zwei Eingänge.

Die Funktionsweise bei dem Empfang einer Botschaft, die die aktuelle Position der Kurbelwelle der Brennkraftmaschine überträgt, wird nachfolgend näher erläutert. Sofort nach dem Empfang des Start-of-Frame-Bits einer Botschaft wird der Bitzähler 45 gestartet. Die empfangenen Bits werden nacheinander in das Schieberegister 30 eingeschoben. Nachdem das CONTROL-Feld vollständig empfangen wurde, erreicht der Bitzähler 45 einen Zählerstand, bei dem ein Bit im Statusregister 41 gesetzt wird. Durch das Setzen dieses Bits wird das UND-Gatter 40 über die Leitung 43 durchlässig, wenn gleichzeitig von Seiten der CPU 16 an den ersten Eingang des UND-Gatters 40 ein logisches "1"-Signal angelegt worden ist. Die CPU 16 setzt diesen Eingang des UND-Gatters 40 schon bei der Initialisierungsphase des Mikrorechners 23 auf ein "1"-Signal. Mit dem Setzen des Bits im Statusregister 41 wird somit auch das R/S-Flip-Flop 35 gesetzt. Über den Q-Ausgang des R/S-Flip-Flops 35 wird dann das UND-Gatter 34 für die Taktimpulse des Schieberegisters 30 durchlässig, so daß das Schieberegister 36 nunmehr auch getaktet wird. Die jetzt ankommenden Daten werden also sowohl in das Schieberegister 30 als auch in das Schieberegister 36 übernommen. Nachdem das letzte Bit des Datenfeldes empfangen wurden, erreicht der Bitzähler 45 erneut einen Zählerstand, an dem ein Bit im Statusregister 41 gesetzt wird. Durch das Setzen dieses Bits wird über die Leitung 44 das R/S-Flip-Flop 35 zurückgesetzt. Dadurch wird das UND-Gatter 34 gesperrt und es können keine weiteren Daten in das Schieberegister 36 aufgenommen werden. Das CRC-Feld und das ACK-Feld wird dann noch in das Schieberegister 30 eingespeichert. Nachdem die Botschaft vollständig empfangen wurde, wird sie von der Bussteuereinheit 33 und der CRC-Erzeugungseinheit 32 überprüft. Sind Übertragungsfehler vorgekommen, so wird die Botschaft im Schieberegister 30 verworfen. War die Botschaft jedoch fehlerfrei empfangen worden und entsprach der Identifier demjenigen für die Daten für die Position der Kurbelwelle, so wird im Statusregister 41 ein Bit gesetzt, so daß über die Leitung 47 der Schalter 38 durchlässig geschaltet wird. Der Speicherinhalt des Schieberegisters 36 wird sodann in das Latch 46 übernommen. Es steht damit der Steuereinheit 18 ab diesem Zeitpunkt über die Busverbindunng 37 zur Verfügung. Die Steuereinheit 18 kann den Speicherinhalt im Latch 46 direkt verwenden, um den Zähler 19 nachzusynchronisieren. Dies kann im einfachsten Fall dadurch geschehen, daß die Steuereinheit 18 den Zählerstand des Zählers 19 auf den Wert einstellt, der in dem Latch 46 abgespeichert ist.

Das über die Leitung 47 zum Schalter 38 herausgeführte Statusbit des Statusregisters 41 wird vor dem Empfang eines neuen Datenfeldes einer nachfolgenden Botschaft des seriellen Busses 2 zurückgesetzt.

Durch das hier beschriebene Verfahren wird die Latenzzeit der Übertragung von sich zeitlich ändernden Werten auf die Übertragungszeit einer Botschaft reduziert. Wird als serieller Bus 20 ein CAN-Bus eingesetzt, so liegt diese Zeit bei einer Übertragungsrate von 1 MBAUD und 32 Datenbits für die Position der Kurbelwelle und der Drehzahl des Motors zwischen 50 und 75 Mikrosekunden. Dieser Wert kann durch Reduktion der Anzahl der relevanten Datenbits noch weiter reduziert werden. Dieser Wert ist so klein, daß die Latenzzeit in den meisten Anwendungsfällen sogar vernachlässigt werden kann.

Nachfolgend werden noch weitere Verfahren beschrieben, durch die auch diese Latenzzeit noch verringert werden kann. Bei einer geringen Dynamik-Änderung der Drehbewegung der Kurbelwelle der Brennkraftmaschine seit dem letzten Empfang einer Botschaft mit der Position der Kurbelwelle kann man davon ausgehen, daß die Zähler in dem Zündungs-Modul 11 und dem Einspritzungs-Modul 12 einen bereits fast korrekten Wert für die Position der Kurbelwelle anzeigen.

In der Steuereinheit 18 wird deshalb bei jeder empfangenen Synchronisationsbotschaft ein weiterer Zähler gestartet, der ab der Übertragung des ersten Bits des Datenfeldes der Botschaft bis zum vollständigen Empfang der Botschaft die aufgetretenen Inkrementierungen des Zählers 19 zählt. Das Steuersignal für diesen Zähler liefert dabei zum Beispiel der Q-Ausgang des R/S-Flip-Flops 35. Ist die Botschaft durch die Aktivierung der Leitung 47 sowohl als gültig anerkannt, als auch als eine Synchronisations-Botschaft erkannt, wird der Zählerinhalt des weiteren Zählers zum Botschaftsdatum auf der Busverbindung 37 addiert und ergibt so den aktuellen Stand für den Zähler 19, auf den dieser zu synchronisieren ist. Selbst bei großen Dynamik-Änderungen der Kurbelwelle ist der Fehler nur so groß, wie sich die Anzahl der Inkrementierungen während der Übertragungszeit vom ersten Datenbit bis zum Acknowledge-Feld verändern kann. Als Vorteil dieser Lösung ist auch der nur geringe zusätzliche Schaltungsaufwand zu sehen.

Eine weitere Lösung betrifft die senderseitige Vorkorrektur der zu übertragenden Synchronisationsdaten. Das Hauptmodul 10 startet bei der Absendung einer Synchronisations-Botschaft einen weiteren Zähler, der die Anzahl der auftretenden Inkrementierungen des Zählers 19 ab dem Senden des ersten Datenbits bis zum vollständigen Absenden der Botschaft zählt. Wird die Botschaft abgebrochen oder tritt eine Störung auf, so wird diese Information verworfen. Wurde die Synchronisations-Botschaft vollständig abgesendet, wird dieser Wert gespeichert und die Summe dieses Wertes und des aktuellen Zählerstandes des Zählers 19 bei Absendung der nächsten Sychronisations-Botschaft statt des aktuellen Zählerstandes des Zählers 19 abgesendet. Auf diese Weise wird der zu erwartende Wert des Zählers 19, der zum Ende der Absendung der Synchronisations-Botschaft vorliegen müßte, gesendet. Auch hier bestimmt dann die Dynamik-Änderung der Brennkraftmaschine seit der letzten Synchronisations-Botschaft die Genauigkeit der Winkeluhren.

Bei einer weiteren Lösungsmöglichkeit wird in der Datenerfassungseinheit 15 des Haupt-Moduls 10 ab dem Absenden des Datenfeldes einer Synchronisations-Botschaft ein zusätzlicher Zähler gestartet, der die Zeit bis zum vollständigen Absenden der Synchronisations-Botschaft mißt. Bei Abbruch der Botschaft oder bei einer aufgetretenen Störung wird diese Information verworfen. Bei erfolgreicher Absendung der Botschaft wird dieser Wert gespeichert. Ein zweiter zusätzlicher Zähler (der mit dem ersten Zähler identisch sein kann) generiert mit diesem gespeicherten Zeitwert ein Zeitfenster, in dem ein dritter zusätzlicher Zähler die Anzahl der in diesem Zeitfenster generierten Inkrementierungen des Zählers 19 zählt. Die Summe dieses Wertes und des aktuellen Zählerstandes des Zählers 19 wird bei Absendung der nächsten Synchronisations-Botschaft übertragen. Diese Lösung hat den Vorteil, daß die Dynamik-Unsicherheit auf die Zeit zwischen zwei gemessenen Zeitfenstern begrenzt wird.

Bei dem CAN-Bus wird von der Bussteuereinheit 33 der CAN-Schnittstelle immer dann ein zusätzliches Stuff-Bit in die Botschaft eingefügt, wenn sich sonst aufgrund der zu übertragenden Daten eine ununterbrochene Sequenz von sechs aufeinanderfolgenden Bits mit dem gleichen Bitpegel ergeben würde. Durch die Einfügung dieser Stuff-Bits kommt auch bei der Übertragung von Synchronisations-Daten eine Latenzzeit-Unsicherheit hinzu. Diese Unsicherheit ist bei den bisher vorgestellten Lösungen zur weiteren Verringerung der Latenzzeit vorhanden. Bei einer weiteren Lösung wird daher die Anzahl der während der Botschaft vorkommenden Stuff-Bits geschätzt. Es ergibt sich dann ein geschätzter konstanter Gesamt-Zeitwert für die Generierung des Zeitfensters. Es werden dann während dieses Zeitfensters wieder die Inkrementierungen des Zählers 19 gezählt. Bei der Absendung der nächsten Synchronisations-Botschaft wird dann wie bei der vorher vorgestellten Lösung die Summe dieses Wertes und des aktuellen Zählerstandes des Zählers 19 als Synchronisationswert übertragen. Die Dynamik-Unsicherheit ist bei dieser Lösung genauso groß wie bei der vorhergehenden Lösung, jedoch ist die mögliche Anzahl von Stuff-Bits mitberücksichtigt.

Bei einer weiteren Lösung wird versucht, die Dynamik-Unsicherheit weiter zu reduzieren. Dabei wird, wie bei einer vorhergehenden Lösung die Zeit der Übertragung der letzten Synchronisations-Botschaft gemessen. Das Haupt-Modul 10 speichert außerdem die Zeitpunkte der auftretenden Inkrementierungen des Zählers 19 in einen FIFO-Speicher (First-In-First-Out) ab. Bei jedem Eintrag überprüft das Haupt-Modul 10, ob die zuerst eingetragenen Zeitpunkte noch innerhalb des Meßfensters aufgetreten sind, wobei das Ende des Meßfensters jeweils der Zeitpunkt der letzten Inkrementierung ist. Wenn der älteste Zeitpunkt außerhalb des Meßfensters liegt, verwirft das Haupt-Modul 10 diese Eintragung des FIFO-Speichers, so daß in dem FIFO-Speicher nur die letzten, aktuellen Inkrementierungen eingetragen sind. Die Anzahl der Eintragungen in diesen Speicher wird dann letztlich bei Absendung der Synchronisations-Botschaft zu dem aktuellen Zählerstand des Zählers 19 hinzuaddiert und die Summe wird dann übertragen. Dadurch ist die Dynamik-Unsicherheit in etwa auf die Zeit eines Meßfensters reduziert. Jedoch ist auch bei dieser Lösung die Anzahl der Stuff-Bits unbestimmt.

Eine weitere Lösung versucht die Unsicherheit, die sich durch die Stuff-Bits ergibt, weiter zu reduzieren. Die voraussichtliche Anzahl der Stuff-Bits kann außer mit einem zusätzlichen sehr leistungsfähigen Rechner praktisch nicht vorausberechnet werden, da sie datenabhängig ist und dieses Datum wiederum von der Anzahl der Stuff-Bits abhängt.Es gibt aber eine mögliche Maximalzahl von Stuff-Bits, die zu berücksichtigen sind. Die minimale Zeit bis zum vollständigen Absenden einer Synchronisations-Botschaft ohne Stuff-Bits ist bei bekannter Übertragungsrate des seriellen Busses bekannt. Für jede mögliche Zahl von Stuff-Bits wird dann ein Zeitwert generiert. Eine Anzahl "erster Zähler" generiert mit diesen Gesamtzeitwerten jeweils ein Zeitfenster, in dem ein Satz "zweiter Zähler" die Anzahl der in diesen Zeitfenstern auftretenden Zählerinkrementierungen des Zählers 19 zählt. Zusammen mit der Kenntnis des CRC-Codes wird die tatsächliche Anzahl der Stuff-Bits für die einzelnen Messungen ermittelt und die Messung mit der geringsten Differenz der angenommenen und ermittelten Stuff-Bitzahl dann bei der nächsten Absendung einer Synchronisations-Botschaft verwendet. Bei dieser Lösung reduziert sich die Dynamik-Unsicherheit auf etwa die Zeit der Übertragung eines Bits.

Bei der folgenden vorgestellten Lösung wird die Anzahl der Stuff-Bits wiederum von dem Haupt-Modul 10 vor der Absendung einer Synchronisations-Botschaft erneut geschätzt. Die minimale Zeit bis zum vollständigen Absenden der Synchronisations-Botschaft ohne Stuff-Bits ist bei bekannter Übertragungsrate des seriellen Busses 20 bekannt. Ebenso ist die maximale Zeit bei Verwendung der maximalen Anzahl von Stuff-Bits bekannt. Das Haupt-Modul 10 berechnet nun die Zeitpunkte der zukünftigen Inkrementierungen des Zählers 19 z.B. aus den gespeicherten Zeitpunkten zu denen jeweils vorher eine Inkrementierung erfolgt war voraus. Er ermittelt die Anzahl der Inkrementierungen für eine Botschaft ohne zusätzliche Stuff-Bits, wie bei den vorhergehenden Lösungen. Ebenfalls wird die Anzahl der Zählerinkrementierungen für eine Botschaft mit der maximalen Anzahl von Stuff-Bits ermittelt. Stimmen diese beiden Anzahlen überein, wird diese Anzahl zum aktuellen Zählerstand des Zählers 19 hinzuaddiert und diese Summe als Synchronisations-Datum für die nächste Synchronisations-Botschaft bereitgestellt.

Stimmen die beiden Anzahlen nicht überein, werden für jeden dieser Werte und alle möglichen Zwischenwerte die Anzahlen von Stuff-Bits ermittelt, die diesen Wert ebenfalls erzeugen. Es wird dann diejenige Summe für die Synchronisations-Botschaft verwendet, die die geringste Differenz von angenommener zu den berechneten Zählerinkrementierungen ergibt.

### Beispiel:

Ohne Stuff-Bits hätte die Botschaft eine Länge, bei der zehn Zählerinkrementierungen nachkorrigiert werden müßten. Mit der angenommenen Maximalzahl von ebenfalls zehn Stuff-Bits hätte die Botschaft eine Länge, bei der zwölf Zählerinkrementierungen nachkorrigiert werden müßten. Da diese beiden Anzahlen nicht übereinstimmen, muß weiter unterteilt werden:
Bei einer Stuff-Bitzahl zwischen 0 und 1 werden zehn Zählerinkrementierungen nachkorrigiert;
bei einer Stuff-Bitzahl zwischen 2 und 6 werden elf Zählerinkrementierungen nachkorrigiert;
bei einer Stuff-Bitzahl zwischen 7 und 10 werden zwölf Zählerinkrementierungen nachkorrigiert.

Es wird errechnet, daß:
Bei einer Botschaft mit Winkeluhrwert + 10 sieben zusätzliche Stuffbits eingefügt werden müßten. In dieser Zeit wären aber 12 Zählerinkrementierungen erfolgt;
bei einer Botschaft mit Winkeluhrwert + 11 ein zusätzliches Stuffbit eingefügt werden müßte. In dieser Zeit wären aber nur 10 Zählerinkrementierungen erfolgt;
bei einer Botschaft mit Winkeluhrwert + 12 Null zusätzliche Stuffbits eingefügt werden müßte. In dieser Zeit wären aber nur 10 Zählerinkrementierungen erfolgt.

Die geringste Differenz ergibt sich also bei der angenommenen Zahl von 11 zusätzlichen Zählerinkrementierungen, so daß dieser Wert für die Synchronisationsbotschaft verwendet wird.

Es soll angemerkt werden, daß weitere Iterationsschritte zur Voraus-Korrektur der Stuffbit-Anzahl möglich sind, diese aber nicht unbedingt bessere Ergebnisse liefern. Im obigen Beispiel wird mit der Korrektur von 10 Inkrementen berechnet, daß eigentlich 12 Inkremente notwendig wären; bei einer Korrektur von 12 Inkrementen wären 10 Inkremente notwendig.

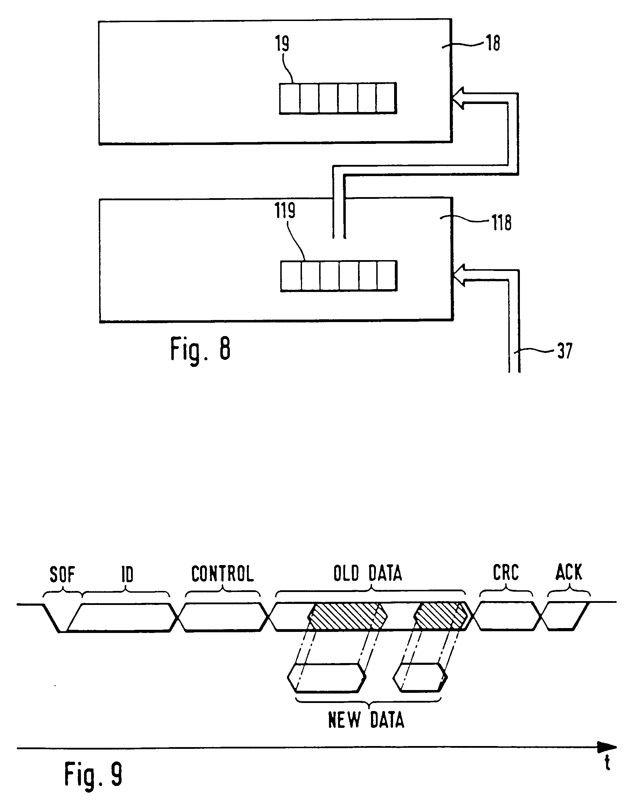

Eine weitere Lösung der empfängerseitigen Korrektur berücksichtigt die bereits vollständig übertragenen aber noch nicht verifizierten Daten während des Empfangs des CRC-Feldes bzw. des ACK-Feldes. Hierbei zählt ein zusätzlicher Zähler im Mikrorechner 23 die für die Übertragung des Datenfeldes notwendige Zeit. Ein zweiter Winkeluhr-Zähler 119 in einer zweiten Steuereinheit 118 wird (wie in Figur 8 dargestellt) sofort nach Empfang des Datenfeldes, gekennzeichnet durch Aktivierung der Leitung 44, mit den empfangenen Daten des zweiten Schieberegisters 36 korrigiert. Die Verarbeitungsgeschwindigkeit (Frequenz der Zählerinkrementierungen) der zweiten Steuereinheit 118 wird dann erhöht, während der zusätzliche Zähler entsprechend dieser Geschwindigkeitserhöhung rückwärts gezählt wird, so daß bei Erreichen der Null im zusätzlichen Zähler der zweite Winkeluhr-Zähler 119 dem aktuellen Zustand des Zählers 19 des sendenden Mikrorechners 13 entspricht. Die Verarbeitungsgeschwindigkeit des Winkeluhr-Zählers 119 wird dann wieder normalisiert.

Der Zähler 19 der Steuereinheit 18 wird bei Betätigung der Korrekturübertragung über die Aktivierung der Leitung 47 auf den Wert des zweiten Winkeluhr-Zählers 119 der zweiten Steuereinheit 118 korrigiert; werden die empfangenen Daten als fehlerhaft erkannt, wird der Zählerstand des zweiten Winkeluhr-Zählers 119 verworfen.

Die Erfindung ist nicht auf das hier vorgestellte Ausführungsbeispiel beschränkt. Anstelle der Synchronisation zweier Winkeluhren für ein verteiltes Motormanagement könnten auch die Meßwerte jeder anderen uhrähnlichen Datenquelle auf die hier beschriebene Art und Weise übertragen werden. Über den seriellen Bus können außer der hier beschriebenen Übertragung von Synchronisations-Botschaften auch beliebige andere Botschaften mit anderen Identifiern übertragen werden. In diesen Fällen bleibt der Umschalter in Schaltposition a geschaltet, so daß keine Datenersetzung stattfindet. Es wäre aber auch möglich, die Datenersetzung für mehrere Botschaften mit bestimmten Identifiern vorzusehen. Auch Ausführungen mit mehreren parallelen externen Schieberegistern sind denkbar, wobei dann auch ein erweiterter Umschalter bzw. Multiplexer mit mehreren Eingängen verwendet werden müßte. Schließlich könnten auch für ein einzelnes externes Schieberegister mehrere unterschiedliche Latches 46 vorgesehen sein.

In einer Variante der Erfindung kann in den Mikrorechner 23 der Module 11 bzw.12 auf das zweite Schieberegister 36 verzichtet werden, wenn die parallelen Daten-Ausgänge des Schieberegisters 30 aus der seriellen Schnittstelle 17 herausgeführt sind. In diesem Fall erübrigen sich auch die mit den Ziffern 34, 35, 40, 43, 44 bezeichneten Elemente der Figur 7.

In einer zweiten Variante der Erfindung kann in dem Mikrorechner 13 des Haupt-Moduls 10 auf das zweite Schieberegister 36 verzichtet werden, wenn die parallelen Daten-Eingänge des Schieberegisters 30 aus der seriellen Schnittstelle 17 herausgeführt sind und mit dem Einschalten des R/S-Flip-Flops 35 die Daten der Busverbindung 37 in das Schieberegister 30 übertragen werden. In diesem Fall erübrigen sich auch die mit den Ziffern 31, 34, 38 bezeichneten Elemente der Figur 4.

In einer weiteren Variante der Erfindung wird nur ein nicht notwendigerweise zusammenhängendes Teil des Datenfeldes aus Figur 5 während der Übertragung durch die Erfindung ersetzt (vgl. Figur 9).

## Patentansprüche

1. Verfahren zur zyklischen Übertragung von Daten, insbesondere von Synchronisationsdaten, zwischen mindestens zwei verteilt arbeitenden Steuergeräten, wobei die mindestens zwei Steuergeräte über einen seriellen Bus, insbesondere CAN-Bus, miteinander verbunden sind, wobei die mindestens zwei Steuergeräte mindestens eine serielle Schnittstelle und eine Rechen-/Steuereinheit aufweisen, wobei von der Rechen-/Steuereinheit eines der mindestens zwei Steuergeräte zyklisch Daten bereitgestellt werden, wobei die Daten mit Hilfe einer Botschaft über den seriellen Bus übertragen werden, wobei von der Rechen-/Steuereinheit des die Botschaft absendenden Steuergerätes ein Sendeauftrag zur Absendung der Botschaft an die serielle Schnittstelle gestellt wird, der daraufhin von der seriellen Schnittstelle abgewickelt wird, dadurch gekennzeichnet, daß bei Absendung der Botschaft nicht diejenigen Daten, die zum Zeitpunkt der Stellung des Sendeauftrages an die serielle Schnittstelle (17) übergeben wurden, verwendet werden, sondern statt dessen die von der Rechen-/Steuereinheit (15) seit dem Zeitpunkt der Abgabe des Sendeauftrages inzwischen aktualisierten Daten.

2. Verfahren nach Anspruch 1, dadurch gekennzeichnet, daß in den mindestens zwei Steuergeräten (10, 11, 12) jeweils ein Zähler (19), insbesondere Zeit- oder Winkelzähler kontinuierlich gezählt wird, daß der Zähler (19) in dem mindestens einen Steuergerät (11, 12), das die Daten empfängt, aufgrund der empfangenen Daten auf einen definierten Wert gesetzt wird.

3. Verfahren nach Anspruch 2, dadurch gekennzeichnet, daß der definierte Wert durch die empfangenen Daten angegeben wird.

4. Verfahren nach Anspruch 3, dadurch gekennzeichnet daß die Zeit für die Übertragung der Daten von dem Steuergerät (10), das die Synchronisationsdaten absendet, derart berücksichtigt wird, daß die letztlich übertragenen Daten einen in die Zukunft projizierten Wert angeben, der dem Zählerstand des Steuergerätes (10), das die Synchronisationsdaten absendet, zum Zeitpunkt der vollständigen Absendung der Botschaft, die die Daten überträgt, entspricht.

5. Verfahren nach Anspruch 4, dadurch gekennzeichnet, daß in dem Steuergerät (10), das die Daten absendet, während der Übertragung von Daten die auftretenden Zählerinkrementierungen oder Dekrementierungen des Zählers (19) gezählt werden, und daß dieser Wert bei einer nachfolgenden Übertragung von Daten zu dem aktuellen Zählerstand hinzuaddiert wird.

6. Verfahren nach Anspruch 4, dadurch gekennzeichnet, daß in dem Steuergerät (10), das die Daten absendet, die Zeit für die Übertragung der Daten gemessen wird, daß in dem Steuergerät (10) zyklisch ein Meßfenster für die Dauer der gemessenen Zeit erzeugt wird, daß in dem Meßfenster die auftretenden Zählerinkrementierungen oder Dekrementierungen des Zählers (19) gezählt werden und daß der jeweils aktuellste Wert dieser Zählungen bei einer nachfolgenden Übertragung von Daten zu dem aktuellen Zählerstand des Zählers (19) hinzuaddiert wird.

7. Verfahren nach Anspruch 1 oder 2, dadurch gekennzeichnet, daß die Zeit für die Übertragung der Daten von dem mindestens einen Steuergerät (11, 12), das die Daten empfängt, derart berücksichtigt wird, daß die empfangenen Daten nach Empfang so korrigiert werden, daß sich ein Zählerstand für den Zähler (19) des Steuergerätes (11, 12) ergibt, der dem Zählerstand des Steuergerätes (10), das die Daten abgesendet hat, zum Zeitpunkt des vollständigen Empfangs der Botschaft, die die Daten überträgt, entspricht.

8. Verfahren nach Anspruch 7, dadurch gekennzeichnet, daß in dem Steuergerät (11, 12), das die Daten empfängt, während der Übertragung von Daten die auftretenden Zählerinkrementierungen oder Dekrementierungen des Zählers (19) gezählt werden und zu dem Wert, der sich aus den empfangenen Daten ergibt, hinzuaddiert werden und daß dieser Wert den definierten Wert angibt, auf den der Zähler (19) in dem Steuergerät (11, 12) gesetzt wird.

9. Verfahren nach Anspruch 7, dadurch gekennzeichnet, daß in dem Steuergerät (11, 12), das die Daten empfängt, diese Daten durch eine zweite Steuereinheit (118) in der Zeit zwischen dem Empfang der Daten und der Bestätigung der Gültigkeit der Übertragung korrigiert werden und dieser Wert den definierten Wert angibt, auf den der Zähler 19 in dem Steuergerät (11, 12) bei Bestätigung der Gültigkeit der Übertragung gesetzt wird.

10. Busteilnehmerstation zur Verwendung bei dem Verfahren nach einem der vorhergehenden Ansprüche, mit einer seriellen Schnittstelle, an die ein serieller Bus anschließbar ist, mit einer Rechen/Steuereinheit (15, 18), die zyklisch aktualisierte Daten für eine Übertragung über den seriellen Bus bereitstellt, wobei die serielle Schnittstelle ein Schieberegister aufweist, in das die abzusendenden Daten eingespeichert werden, wobei die serielle Schnittstelle von einer Steuerschaltung einen Sendeauftrag für die Absendung der eingespeicherten Daten erhält, mit Mitteln zur Abwicklung des Sendeauftrags, dadurch gekennzeichnet, daß sie Mittel (36, 31) aufweist, die bei der Abwicklung des Sendeauftrags mindestens einen Teil der zuvor in das Schieberegister (30) eingespeicherten Daten durch die neuesten, in der Zwischenzeit von der Rechen/Steuereinheit (15, 18) aktualisierten Daten ersetzen.

11. Busteilnehmerstation nach Anspruch 10, dadurch gekennzeichnet, daß sie als Mittel zur Ersetzung des Teils der zuvor eingespeicherten Daten durch die neuesten, in der Zwischenzeit von der Rechen/Steuereinheit (15, 18) aktualisierten Daten ein zweites Schieberegister (36) aufweist, in das die aktualisierten Daten zu einem vorbestimmten Zeitpunkt (T9) eingespeichert werden, daß der Ausgang des zweiten Schieberegisters (36) mit einem Umschalter (31), insbesondere Multiplexer, in Verbindung steht, der in seinem einen Schaltzustand (A) den Ausgang des ersten Schieberegisters (30) mit dem seriellen Bus (20) verbindet und in seinem zweiten Schaltzustand (B) statt dessen den Ausgang des zweiten Schieberegisters (36) mit dem seriellen Bus (20) verbindet.

12. Busteilnehmerstation nach Anspruch 11, dadurch gekennzeichnet, daß die serielle Schnittstelle (17) einen Bitzähler (45) aufweist, der die Anzahl der pro Botschaft gesendeten Bits mitzählt, daß der Zeitpunkt für die Einspeicherung der aktualisierten Daten in das zweite Schieberegister (36) und für die Umschaltung des Umschalters (31) von dem Bitzähler (45) vorgegeben wird.

13. Busteilnehmerstation nach Anspruch 11 oder 12, dadurch gekennzeichnet, daß sie als Motor-Steuergerät für die Steuerung einer Brennkraftmaschine ausgelegt ist, in dem mindestens die Drehbewegung der Kurbelwelle der Brennkraftmaschine erfaßt wird und daß das Steuergerät als zyklisch aktualisierte Daten, Daten, die die momentane Stellung der Kurbelwelle der Brennkraftmaschine und/oder die momentane Drehzahl der Brennkraftmaschine angeben, bereitstellt.

14. Busteilnehmerstation nach einem vorhergehenden Ansprüche 10 bis 13, dadurch gekennzeichnet, daß sie einen kontinuierlich zählenden weiteren Zähler (50) enthält, der jeweils nach dem Durchlaufen eines vorbestimmten Zählerintervalls ein Signal an die serielle Schnittstelle (17) abgibt, durch das ein Sendeanforderungs-Bit in einem Statusregister (41) der seriellen Schnittstelle (17) gesetzt wird.

15. Busteilnehmerstation zur Verwendung bei dem Verfahren nach einem der vorhergehenden Ansprüche 1 bis 9, mit einer seriellen Schnittstelle, an die ein serieller Bus anschließbar ist, wobei die serielle Schnittstelle ein Schieberegister aufweist, in das die über den seriellen Bus empfangenen Daten eingespeist werden, dadurch gekennzeichnet, daß sie Mittel (38, 46) aufweist, die bei dem Empfang einer bestimmten Botoschaft zumindest einen Teil der empfangenen Daten bereits während der Gültigkeitsprüfung der Daten einer zweiten Steuereinheit (118) zur Bearbeitung zur Verfügung stellt.

16. Busteilnehmer nach Anspruch 15, dadurch gekennzeichnet, daß sie die durch die zweite Steuereinheit (118) berechneten Daten erst dann zur Verarbeitung in der ersten Steuereinheit (18) übernimmt, wenn die serielle Schnittstelle (17) die empfangene Botschhaft auf Fehlerfreiheit überprüft und dabei festgestellt hat, daß die Botschaft fehlerfrei empfangen wurde.

17. Busteilnehmerstation zur Verwendung bei dem Verfahren nach einem der vorhergehenden Ansprüche 1 bis 9, mit einer seriellen Schnittstelle, an die ein serieller Bus anschließbar ist, wobei die serielle Schnittstelle ein Schieberegister aufweist, in das die über den seriellen Bus empfangenen Daten eingespeichert werden, dadurch gekennzeichnet, daß sie Mittel aufweist, die bei dem Empfang einer bestimmten Botschaft zumindest einen Teil der empfangenen Daten parallel in ein zweites Schieberegister (36) einspeichern.

18. Busteilnehmerstation nach Anspruch 17, dadurch gekennzeichnet, daß sie die in das zweite Schieberegister (36) eingespeicherten Daten erst dann zur Verarbeitung übernimmt, wenn die serielle Schnittstelle (17) die empfangene Botschaft auf Fehlerfreiheit überprüft hat und dabei festgestellt hat, daß die Botschaft fehlerfrei empfangen wurde.

19. Busteilnehmerstation nach einem der Ansprüche 15 bis 18, dadurch gekennzeichnet, daß die serielle Schnittstelle (17) einen Bitzähler (45) aufweist, der die Anzahl der pro Botschaft empfangenen Bits mitzählt, und daß der Bitzähler (45) die Zeitpunkte für den Beginn und das Ende der Einspeicherung der Daten angibt, wobei die Daten nach den Ansprüchen 17 und 18 in das zweite Schieberegister (36) eingespeichert werden.

20. Busteilnehmerstation nach einem der Ansprüche 15 bis 19, dadurch gekennzeichnet, daß sie als Motor-Steuergerät für die Steuerung einer Brennkraftmaschine, insbesondere als Zündungssteuergerät oder als Einspritzungssteuergerät, ausgelegt ist und daß sie über den anschließbaren seriellen Bus (20) zyklisch Botschaften mit Daten, die die momentane Stellung der Kurbelwelle der Brennkraftmaschine und/oder die momentane Drehzahl der Brennkraftmaschine angeben, empfängt.

## Claims

1. Method for the cyclic transmission of data, in particular synchronization data, between at least two control devices with distributed operation, the at least two control devices being interconnected via a serial bus, in particular a CAN bus, the at least two control devices having at least one serial interface and an arithmetic/control unit, data being provided cyclically by the arithmetic/control unit of one of the at least two control devices, the data being transmitted with the aid of a message via the serial bus, a transmission job for transmitting the message being provided at the serial interface by the arithmetic/control unit of the control device transmitting the message, which job is subsequently handled by the serial interface, characterized in that when transmitting the message, use is made not of those data which were passed to the serial interface (17) at the instant of providing the transmission job, but instead of the data which have been updated by the arithmetic/control unit (15) in the interim since the instant of giving the transmission job.

2. Method according to Claim 1, characterized in that in each case one counter (19), in particular a time or angle counter, is counted continuously in the at least two control devices (10, 11, 12), and in that the counter (19) in the at least one control device (11, 12) receiving the data is set to a defined value on the basis of the received data.

3. Method according to Claim 2, characterized in that the defined value is specified by the received data.

4. Method according to Claim 3, characterized in that the time taken to transmit the data is taken into account by the control device (10) which transmits the synchronization data, in such a way that the data transmitted in the end specify a value which is projected into the future and corresponds to the counter reading of the control device (10), which transmits the synchronization data, at the instant of complete transmission of the message which transmits the data.

5. Method according to Claim 4, characterized in that the counter increments or decrements of the counter (19) which occur are counted, during the transmission of data, in the control device (10) which transmits the data, and in that this value is added to the current counter reading in the event of a subsequent transmission of data.

6. Method according to Claim 4, characterized in that the time taken to transmit the data is measured in the control device (10) which transmits the data, in that a measurement window for the duration of the measured time is cyclically produced in the control device (10), in that the counter increments or decrements of the counter (19) which occur are counted in the measurement window, and in that the respectively most up to date value of these counts is added to the current counter reading of the counter (19) in the event of a subsequent transmission of data.

7. Method according to Claim 1 or 2, characterized in that the time taken to transmit the data is taken into account by the at least one control device (11, 12) which receives the data, in such a way that the received data are corrected after reception to produce a counter reading for the counter (19) of the control device (11, 12) which corresponds to the counter reading of the control device (10), which has transmitted the data, at the instant of complete reception of the message which transmits the data.

8. Method according to Claim 7, characterized in that the counter increments or decrements of the counter (19) which occur are counted, during the transmission of data, in the control device (11, 12) which receives the data, and are added to the value produced from the received data, and in that this value specifies the defined value to which the counter (19) in the control device (11, 12) is set.

9. Method according to Claim 7, characterized in that, in the control device (11, 12) which receives the data, said data are corrected by a second control unit (118) in the time between the reception of the data and the confirmation of the validity of the transmission, and this value specifies the defined value to which the counter (19) in the control device (11, 12) is set upon confirmation of the validity of the transmission.

10. Bus subscriber station for use in the method according to one of the preceding claims, having a serial interface to which a serial bus can be connected, having an arithmetic/control unit (15, 18) which provides cyclically updated data for transmission via the serial bus, the serial interface having a shift register in which the data to be transmitted are stored, a control circuit providing the serial interface with a transmission job to transmit the stored data, having means to handle the transmission job, characterized in that it has means (36, 31) which, when handling the transmission job, replace at least some of the data stored previously in the shift register (30) by the most recent data which have been updated in the interim by the arithmetic/control unit (15, 18).

11. Bus subscriber station according to Claim 10, characterized in that its means for replacing some of the previously stored data by the most recent data which have been updated in the interim by the arithmetic/control unit (15, 18) are constituted by a second shift register (36), in which the updated data are stored at a prescribed instant (T9), in that the output of the second shift register (36) is connected to a changeover switch (31), in particular a multiplexer, which, in its first switched state (A), connects the output of the first shift register (30) to the serial bus (20) and, in its second switched state (B), instead connects the output of the second shift register (36) to the serial bus (20).

12. Bus subscriber station according to Claim 11, characterized in that the serial interface (17) has a bit counter (45) which concomitantly counts the number of bits transmitted per message, and in that the instant for storing the updated data in the second shift register (36) and for switching over the changeover switch (31) is predetermined by the bit counter (45).

13. Bus subscriber station according to Claim 11 or 12, characterized in that it is designed as an engine control device for the control of an internal combustion engine, in which at least the rotary movement of the crankshaft of the internal combustion engine is acquired, and in that the cyclically updated data which are provided by the control device are data which indicate the instantaneous position of the crankshaft of the internal combustion engine and/or the instantaneous speed of the internal combustion engine.

14. Bus subscriber station according to one of the preceding Claims 10 to 13, characterized in that it contains a continuously counting further counter (50), which emits a signal to the serial interface (17) each time a prescribed counter interval has elapsed, as a result of which signal a transmission request bit is set in a status register (41) of the serial interface (17).

15. Bus subscriber station for use in the method according to one of the preceding Claims 1 to 9, having a serial interface to which a serial bus can be connected, the serial interface having a shift register into which the data received via the serial bus are fed, characterized in that it has means (38, 46) which, when receiving a specific message, make at least some of the received data available, for processing, to a second control unit (118) as early as during the validity check of the data.

16. Bus subscriber station according to Claim 15, characterized in that it accepts the data calculated by the second control unit (118) for processing in the first control unit (18) only when the serial interface (17) has checked the received message to see whether it is free from errors and in the process has established that the message has been received without any errors.

17. Bus subscriber station for use in the method according to one of the preceding Claims 1 to 9, having a serial interface to which a serial bus can be connected, the serial interface having a shift register in which the data received via the serial bus are stored, characterized in that it has means which, when receiving a specific message, store at least some of the received data in parallel in a second shift register (36).

18. Bus subscriber station according to Claim 17, characterized in that it accepts the data stored in the second shift register (36) for processing only when the serial interface (17) has checked the received message to see whether it is free from errors and in the process has established that the message has been received without any errors.

19. Bus subscriber station according to one of Claims 15 to 18, characterized in that the serial interface (17) has a bit counter (45) which concomitantly counts the number of bits received per message, and in that the bit counter (45) specifies the instants for the beginning and the end of the data storage, the data being stored, according to Claims 17 and 18, in the second shift register (36).

20. Bus subscriber station according to one of Claims 15 to 19, characterized in that it is designed as an engine control device for the control of an internal combustion engine, in particular as an ignition control device or as an injection control device, and in that it cyclically receives, via the serial bus (20) which can be connected, messages with data which indicate the instantaneous position of the crankshaft of the internal combustion engine and/or the instantaneous speed of the internal combustion engine.

## Revendications

1. Procédé de transmission cyclique de données notamment de données de synchronisation entre au moins deux appareils de commande fonctionnant de manière répartie, au moins ces deux appareils de commande étant reliés par un bus série, notamment un bus CAN, et au moins deux appareils de commande ayant au moins une interface série et une unité de calcul et de commande, l'unité de calcul et de commande d'au moins l'un des deux appareils de commande fournissant cycliquement des données, ces données étant transmises à l'aide d'un message par le bus série, l'unité de commande et de calcul de l'appareil de commande émettant le message fournissant une requête d'émission pour émettre le message à l'interface série, et cette émission étant alors déroulée par l'interface série,
caractérisé en ce qu'
à l'émission du message on n'utilise pas les données qui ont été transmises à l'interface série 17 à l'instant auquel a été faite la requête d'émission mais au lieu ce cela, on transmet les données entre temps actualisées depuis l'instant de l'envoi de la requête d'émission par l'unité de calcul et de commande 15.

2. Procédé selon la revendication 1,
caractérisé en ce que
dans au moins les deux appareils de commande (10, 11, 12) un compteur (19) notamment un compteur de temps ou d'angle compte en continu et ce compteur (19) reçoit les données dans au moins un appareil de commande (11, 12) pour être mis à une valeur définie en fonction des données reçues.

3. Procédé selon la revendication 2,
caractérisé en ce que
la valeur définie est indiquée par les données reçues.

4. Procédé selon la revendication 3,
caractérisé en ce que
le temps de transmission des données est pris en compte par l'appareil de commande (10) qui émet les données de synchronisation pour que les données transmises en dernier lieu indiquent une valeur prévisionnelle correspondant à l'état de comptage à l'appareil de commande (10) émettant les données de synchronisation, à l'instant où l'émission du message est terminée.

5. Procédé selon la revendication 4,
caractérisé en ce que
dans l'appareil de commande (10) envoyant les données, pendant la transmission des données, on compte les incréments de comptage ou les décréments de comptage qui se produisent dans le compteur (19) et cette valeur est ajoutée à l'état de comptage actuel au cours de la transmission suivante des données.

6. Procédé selon la revendication 4,
caractérisé en ce que
dans l'appareil de commande (10) émettant les données, on mesure le temps nécessaire à la transmission des données et dans l'appareil de commande (10) on génère de manière cyclique une fenêtre de temps pour la durée correspondant au temps mesuré et dans cette fenêtre de temps, on compte les incréments ou décréments de comptage qui se produisent pour le compteur (19) et la valeur chaque fois la plus actuelle de ces comptages est ajoutée lors de la transmission suivante des données à l'état de comptage actuel du compteur (19).

7. Procédé selon la revendication 1 ou 2,
caractérisé en ce qu'
on tient compte du temps pour la transmission des données par au moins un appareil de commande (11, 12) recevant les données, et on corrige les données après leur réception et on obtient un état de comptage pour le compteur (19) de l'appareil de commande (11, 12) qui correspond à l'état de comptage de l'appareil de commande (10) envoyant les données à l'instant correspondant à la réception complète du message transmettant les données.

8. Procédé selon la revendication 7,
caractérisé en ce que
dans l'appareil de commande (11, 12) recevant les données, pendant la transmission des données on compte les incréments ou les décréments du compteur (19) produits et on les ajoute à la valeur résultant des données reçues et cette valeur indique la valeur définie à laquelle est mise le compteur (19) dans l'appareil de commande (11).

9. Procédé selon la revendication 7,
caractérisé en ce que
dans l'appareil de commande (11, 12) recevant les données, on corrige les données par une seconde unité de commande (118) pour la durée comprise entre la réception des données et la confirmation de la validité de la transmission, et cette valeur indique la valeur définie à laquelle est mise le compteur (19) dans l'appareil de commande (11, 12) à la confirmation de la validité de la transmission.

10. Station participant à un bus pour la mise en oeuvre du procédé selon l'une des revendications précédentes, comprenant une interface série à laquelle peut être relié un bus série, avec une unité de commande et de calcul (15, 18) fournissant des données actualisées de manière cyclique pour la transmission par le bus série, l'interface série ayant un registre à décalage enregistrant les données à émettre et l'interface série reçoit d'un circuit de commande, une requête d'émission pour émettre les données mises en mémoire, et des moyens pour dérouler la requête d'émission,
caractérisée en ce que
cette station comprend des moyens (36, 31) qui lors du déroulement de la requête d'émission, remplace au moins une partie des données préalablement enregistrées dans le registre à décalage (30) par les dernières données actualisées dans l'intervalle par l'unité de calcul et de commande (15, 18).

11. Station selon la revendication 10,
caractérisée en ce qu'
elle comporte des moyens pour remplacer la partie des données enregistrées préalablement par les dernières données actualisées dans l'intervalle par l'unité de calcul et de commande (15, 18), avec un second registre à décalage (36) contenant les données actualisées à un instant prédéterminé (t9) et la sortie du second registre à décalage (36) est reliée à un commutateur (31) notamment un multiplexeur qui, dans son état de commutation « a » relie la sortie du premier registre à décalage (30) au bus série (20) et dans son second état de commutation « b » relie au lieu de cela, la sortie du second registre à décalage (36) au bus série (20).

12. Station selon la revendication 11,
caractérisée en ce que
l'interface série (17) comporte un compteur de bits (45) qui compte le nombre de bits envoyés par message et l'instant pour l'enregistrement des données actualisées dans le second registre à décalage (36) et pour la commutation du commutateur (31) est prédéterminé par le compteur de bits (45).

13. Station selon la revendication 11 ou 12,
caractérisée en ce qu'
elle est conçue comme appareil de commande de moteur pour commander un moteur à combustion interne qui détecte au moins un mouvement de rotation du vilebrequin du moteur à combustion interne et l'appareil de commande fournit des données actualisées, des données qui représentent la position instantanée du vilebrequin du moteur à combustion interne et/ou la vitesse de rotation instantanée du moteur à combustion interne.

14. Station selon l'une quelconque des revendications précédentes 10 à 13,
caractérisée en ce qu'
elle comporte un autre compteur (50) comptant en continu et qui chaque fois après le passage d'un intervalle de comptage prédéterminé, fournit un signal à l'interface série (17) qui met un bit de requête d'émission dans un registre d'état (41) de l'interface série (17).

15. Station participant à un bus applicable à la mise en oeuvre du procédé selon l'une quelconque des revendications précédentes 1 à 9 comprenant une interface série à laquelle peut être relié un bus série, l'interface série ayant un registre à décalage enregistrant les données reçues par le bus série,
caractérisée en ce qu'
elle comprend des moyens (38, 46) qui à la réception d'un certain message, fournissent au moins une partie des données reçues déjà au cours du contrôle de validité des données à une seconde unité de commande (118) pour le traitement.

16. Station selon la revendication 15,
caractérisée en ce que
par la seconde unité de commande (118) elle reçoit des données calculées seulement pour leur traitement à la première unité de calcul (18) si l'interface série (17) a vérifié que le message reçu ne comportait pas d'erreur et a constaté ainsi que le message a été reçu sans erreur.

17. Station participant à un bus applicable au procédé selon l'une quelconque des revendications 1 à 9 comprenant une interface série à laquelle peut être reliée un bus série, l'interface série ayant un registre à décalage dans lequel sont enregistrées les données reçues par le bus série,
caractérisée par
des moyens qui à la réception d'un certain message, enregistrent au moins une partie des données reçues en parallèle à un second registre à décalage (36).

18. Station selon la revendication 17,
caractérisée en ce qu'
elle reprend pour le traitement les données enregistrées dans le second registre à décalage (36) si l'interface série (17) a vérifié que le message reçu ne comportait pas d'erreur et a constaté effectivement que le message a été reçu sans erreur.

19. Station selon l'une des revendications 15 à 18,
caractérisée en ce que
l'interface série (17) comporte un compteur de bit (45) qui compte le nombre de bits reçus par message et le compteur de bit (45) indique les instants du début et de la fin de l'enregistrement des données, les données étant enregistrées dans le second registre à décalage (36) selon les revendications (17 et 18).

20. Station selon l'une quelconque des revendications 15 à 19,
caractérisée en ce qu'
elle est réalisée comme appareil de commande de moteur pour commander un moteur à combustion interne notamment comme appareil de commande d'allumage ou appareil de commande d'injection et elle reçoit par le bus série (20) des messages cycliques avec des données indiquant la position instantanée du vilebrequin du moteur à combustion interne et/ou la vitesse de rotation instantanée du moteur à combustion interne.
